# EUROPEAN PATENT APPLICATION

(11) **EP 3 764 238 A1**
(43) Date of publication of application: **13.01.2021**
(21) Application number: 20182250.9
(22) Date of filing: 25.06.2020
(51) Int. Cl.: G06F 12/0806

(54) **PROCESSING CIRCUIT, INFORMATION PROCESSING APPARATUS, AND INFORMATION PROCESSING METHOD**

(30) Priority: 10.07.2019 JP 2019128799
(71) Applicant: FUJITSU LIMITED, Kanagawa 211-8588 (JP)
(72) Inventor: Shimizu, Takashi, Kanagawa, 211-8588 (JP); Yokoyama, Ken, Kanagawa, 211-8588 (JP)
(74) Representative: Hoffmann Eitle

(57) **Abstract**

Information processing circuit includes an accelerator function unit (AFU), an FPGA interface unit (FIU), a tag check unit, and an output control unit. The AFU sequentially obtains write control instructions for a plurality of kinds of data including an output waiting instruction that stops output of a subsequent instruction. The FIU sequentially outputs the write control instructions via a first path or a second path. The tag check unit receives responses to the write control instructions output from the FIU. The output control unit selects one of the first path and the second path based on the storage address of the write control instruction, determines the necessity for mixing write control instructions, mixes write control instructions and causes the FIU to output the result.

## Description

### FIELD

The embodiments discussed herein are related to an information processing circuit, and an information processing apparatus, an information processing method.

### BACKGROUND

There is a field-programmable gate array (FPGA) that is a circuit performing direct memory access (DMA) by analyzing a packet and determining a transfer destination. The FPGA performing such packet transfer is mounted in a network switch, for example.

Instructions of DMA by the FPGA performing packet transfer includes write control instructions such as a direct write instruction, a via-cache write instruction, and a sequence control instruction. The direct write instruction is an instruction to write to a dynamic random-access memory (DRAM) without writing to a cache. The via-cache write instruction is an instruction to write to a cache with modify (M) state according to the modify exclusive shared invalid (MESI) protocol. The sequence control instruction is an instruction that guarantees the order of an issued write control instruction and subsequent instructions.

The FPGA performing packet transfer has an accelerator function unit (AFU) and an FPGA interface unit (FIU), for example. The AFU is an accelerator circuit designed by a user and performs DMA. The FIU is a circuit including a bus end point between a CPU and the FPGA. In the FIU, a bus arbiter that performs bus arbitration operates. The FIU further has an FPGA cache. The AFU and the FIU are coupled by a Cache Coherent Interface (CCI).

The FPGA performing packet transfer is coupled to a central processing unit (CPU) core and the DRAM through a cache ring in which a plurality of caches is coupled, for example. For example, in the FPGA, the FIU and the cache ring are coupled via a Peripheral Component Interface (PCI) bus and an Ultra Path Interconnect (UPI). The coupling through the two buses secures a wide bus band. The UPI is a high-performance bus. However, because the frequency of use of the UPI is high in communication between the CPU and the DRAM, there is a possibility that packets are retained, resulting in a low throughput. There may be a case where it is difficult to obtain sufficient performance.

As a technology relating to DMA, there is a related art that performs image processing and communication processing in one system by separating a bus for data processing and a bus for communication control to perform DMA transfer. There is also a related art relating to a semiconductor apparatus having a switch circuit that performs coupling setting on a plurality of buses and a plurality of modules based on information regarding communication standards including information on drive voltage.

### Citation List

### Patent Document

Patent Document 1: Japanese Laid-open Patent Publication No. 04-346151
Patent Document 2: International Publication Pamphlet No. WO 2016/075727

### SUMMARY

### Technical Problem

However, in cache control over an FPGA that performs packet transfer, a sequence control instruction stops processing of a subsequent write control instruction until all responses to issued write control instructions are received. The subsequent write control instruction stopped to be processed by the sequence control instruction waits in a queue at the border of a cache coherence for securing data integrity. Therefore, there is a possibility that the system performance is reduced when a sequence control instruction is used.

Even when the related art is used that performs DMA transfer by separating a bus for data processing and a bus for communication control, it is difficult to reduce the delay of processing of write control instructions due to a sequence control instruction. There is a possibility that the system performance is reduced. The related art that performs coupling setting on a plurality of buses and a plurality of modules based on information on communication standards including information on drive voltage does not consider the delay of processing of write control instructions due to a sequence control instruction. It is difficult to alleviate the reduction of the system performance.

According to one aspect, an object of the present invention is to alleviate the reduction of the system performance.

### Solution To Problem

According to an aspect of the embodiments, an information processing circuit includes: a first path being an output path for an instruction and a second path having a lower transfer rate than that of the first path; an instruction obtaining circuit that sequentially obtains write control instructions including an output waiting instruction that stops output of a subsequent instruction; an output circuit that sequentially outputs the write control instructions via the first path or the second path; a response receiving circuit that receives responses to the write control instructions output from the output circuit; and an output control circuit that selects one of the first path and the second path based on a storage addresses of the write control instructions, determines whether to merge the write control instructions, merges the write control instructions based on the determination and causes the output circuit to output the result.

### Advantageous Effects of Invention

According to one aspect of the present invention, it is possible to alleviate the reduction of the system performance.

### BRIEF DESCRIPTION OF DRAWINGS

FIG. 1 is a schematic configuration diagram of an information processing apparatus;
FIG. 2 is a diagram illustrating a configuration of a DRAM included in an information processing apparatus according to an embodiment;
FIG. 3 is a block diagram of an instruction control circuit;
FIG. 4 is a diagram illustrating transitions of write control instructions when a bus control is executed;
FIG. 5 is a diagram illustrating transitions of write control instructions when processing for mixing write control instructions is executed;
FIG. 6 is a diagram illustrating transitions of write control instructions when both of the bus control and the processing for mixing write control instructions are executed;
FIG. 7A and 7B is a flowchart of output control processing for a write control instruction; and
FIG. 8 is a flowchart of processing to be performed when a response to a write control instruction is received.

### DESCRIPTION OF EMBODIMENTS

Hereinafter, embodiments of an information processing circuit, an information processing apparatus, an information processing method and an information processing program disclosed in this application will be described in detail with reference to the drawings. The information processing circuit, the information processing apparatus, the information processing method and information processing program disclosed in this application are not limited by the following embodiments.

### Embodiments

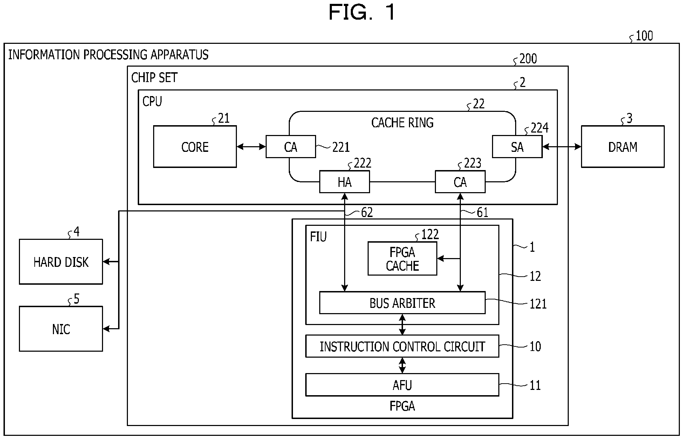

FIG. 1 is a schematic configuration diagram of an information processing apparatus. An information processing apparatus 100 according to an embodiment includes an FPGA 1 for DMA transfer, a CPU 2, a DRAM 3, a hard disk 4 and a network interface card (NIC) 5, as illustrated in FIG. 1, for example. The FPGA 1 and the CPU 2 are mounted over one chip set 200 according to this embodiment. An information processing circuit may be the FPGA 1.

The CPU 2 has a core 21 and a cache ring 22. The core 21 executes various arithmetic operations. For example, the core 21 determines data transfer using DMA when an arithmetic operation is executed. The core 21 instructs the FPGA 1 to perform the DMA transfer.

The cache ring 22 is a communication path for instruction transfer to which a plurality of caches is coupled. Caches coupled to the cache ring 22 include, for example, a level (L) 1 cache included in the core 21 and an FPGA cache 122 included in the FPGA 1, which will be described below.

The cache ring 22 has a cache agent (CA) 221, a home agent (HA) 222, a CA 223, and a system agent (SA) 224. The CAs 221 and 223 are intercoupled with the caches and the cache ring 22. The CA 221 is coupled to the core 21 via a UPI 61 and executes data transfer at a higher transfer rate compared with that of a PCI bus 62, for example. The CA 223 is coupled to an FIU 12 in the FPGA 1, which will be described below, via the UPI 61 and executes data transfer at a higher transfer rate compared with that of the PCI bus 62.

The HA 222 is intercoupled with an input/output (IO) device and the cache ring 22. The HA 222 is coupled to the PCI bus 62 that is slower than the UPI 61. The SA 224 is intercoupled with the DRAM 3 that is a system memory and the cache ring 22.

The FPGA 1 has an instruction control circuit 10, an AFU 11 and the FIU 12. The FIU 12 has a bus arbiter 121 and an FPGA cache 122. The AFU 11 and the instruction control circuit 10 and the instruction control circuit 10 and the FIU 12 are coupled by a Cache Coherent Interconnect (CCI).

The AFU 11 controls DMA transfer, for example. More specifically, for example, the AFU 11 receives a packet from the core 21 in the chip set 200 over which the AFU 11 is mounted or the FPGA 1 in another information processing apparatus 100. The AFU 11 analyzes the received packet, determines the destination of the packet and transmits the packet to the determined destination. For example, when the packet is a write control instruction that instructs to write data to the DRAM 3, the AFU 11 stores the data to the DRAM 3 through the instruction control circuit 10 and the FIU 12. The AFU 11 outputs the write control instruction by determining the bus being the output destination of the write control instruction as the UPI 16. The AFU 11 corresponds to an example of an "instruction obtaining unit".

The instruction control circuit 10 receives the packet transmitted from the core 21 or the FPGA 1 in another information processing apparatus 100 from the FIU 12 and outputs it to the AFU 11. The instruction control circuit 10 receives from the AFU 11 inputs of write control instructions such as a direct write instruction, a via-cache write instruction and a sequence control instruction and a read control instruction, for example. The sequence control instruction corresponds to an example of an "output waiting instruction".

The instruction control circuit 10 executes output control processing for improving the throughput for write control instructions. The output control processing includes bus control such as determination of an output path to the cache ring 22 for a write control instruction, determination of the necessity for merging write control instructions, and processing for mixing write control instructions on which merging is to be performed. For a write control instruction, the instruction control circuit 10 causes the FIU 12 to output the write control instruction in accordance with the result of the output control processing. For a read control instruction, the instruction control circuit 10 simply causes the FIU 12 to output the input read control instruction. Details of the operations by the instruction control circuit 10 will be described below.

The bus arbiter 121 in the FIU 12 is coupled to the CA 223 in the cache ring 22 via the UPI 61. The bus arbiter 121 performs data communication with the CA 223 via the UPI 61. The bus arbiter 121 is coupled to the HA 222 in the cache ring 22 via the PCI bus 62. The bus arbiter 121 performs data communication with the HA 222 via the PCI bus 62.

When the bus arbiter 121 receives a sequence control instruction and if its output destination is the UPI 61, the bus arbiter 121 retains subsequent write control instructions in a queue within the bus arbiter 121 until the sequence control is cancelled. If the output destination is the PCI bus 62, the bus arbiter 121 outputs subsequent write control instructions to the HA 222 and retains the subsequent write instructions in a queue in the HA 222. The queue in the path to the UPI 61 of the bus arbiter 121 and the queue in the HA 222 correspond to the queue at the boundary of the cache coherence. The FIU 12 corresponds to an example of an "output unit". The UPI 61 corresponds to an example of a "first path", and the PCI bus 62 corresponds to an example of a "second path".

For example, the bus arbiter 121 receives from the instruction control circuit 10 input of a packet of a write control instruction. When the transfer path designated in the packet is the UPI 61, the bus arbiter 121 outputs the packet by using the UPI 61. When the bus arbiter 121 receives input of a sequence control instruction as a write control instruction, the bus arbiter 121 stores the subsequently input write control instructions to a queue for outputting to the UPI 61. After that, when a response is received to the write control instruction corresponding to the sequence control instruction that stops the output of the subsequent write control instructions, the bus arbiter 121 restarts the output of the write control instructions from the beginning of the queue and outputs the response to the instruction control circuit 10.

When the transfer path designated in the packet is the PCI bus 62, the bus arbiter 121 outputs the packet by using the PCI bus 62. Also in this case, when receiving input of a sequence control instruction as a write control instruction, the bus arbiter 121 performs the same control as the output control on the UPI 61.

The FPGA cache 122 is coupled to the UPI 61. The FPGA cache 122 is a cache to be used when DMA transfer of data is executed on the DRAM 3.

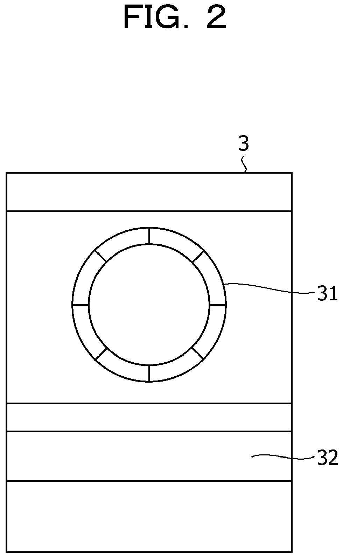

The DRAM 3 is a main storage device for the information processing apparatus 100. In this embodiment, the DRAM 3 has a ring buffer 31 as illustrated in FIG. 2. FIG. 2 is a diagram illustrating a configuration of the DRAM included in the information processing apparatus according to this embodiment. The DRAM 3 has the ring buffer 31 and an index storage area 32.

In the DRAM 3, data are written to the ring buffer 31. After data are written to the ring buffer 31, indices indicating the storage locations of the data written to the ring buffer 31 are written to the index storage area 32, and the index storage area 32 is updated. According to this embodiment, DMA transfer to be executed by an application specific to writing to the ring buffer 31 will be described as an example. Such an application may be software that executes deep-learning, image processing and AI control, for example.

The hard disk 4 is an auxiliary storage device for the information processing apparatus 100. The hard disk 4 is coupled to the PCI bus 62. The hard disk 4 holds a program that operates a virtual machine, for example.

The NIC 5 is coupled to the PCI bus 62. The core 21, the DRAM 3 and the FPGA 1 communicate with another information processing apparatus 100 via the NIC 5.

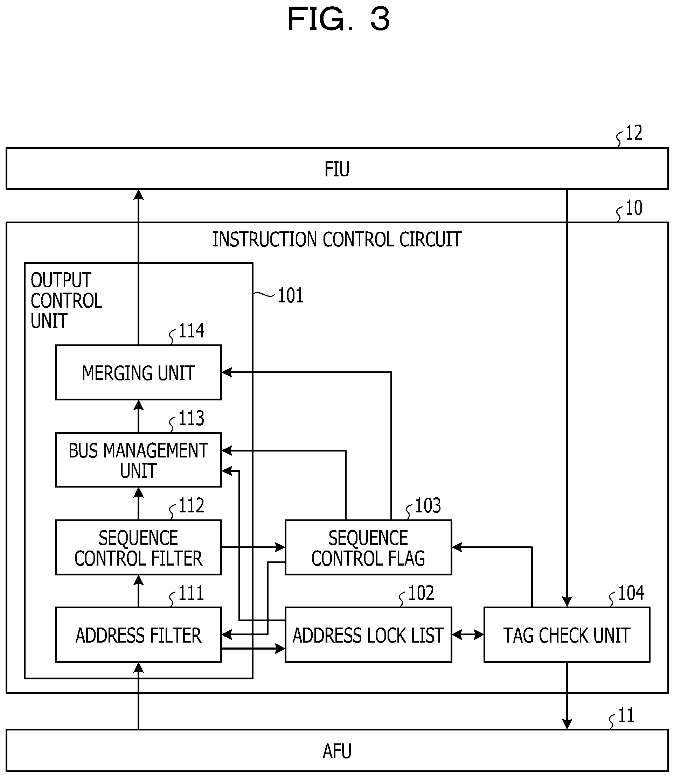

Next, with reference to FIG. 3, details of an output control function by the instruction control circuit 10 will be described. FIG. 3 is a block diagram of the instruction control circuit.

The instruction control circuit 10 has, as illustrated in FIG. 3, an output control unit 101, an address lock list 102, a sequence control flag 103 and a tag check unit 104. The output control unit 101 has an address filter 111, a sequence control filter 112, a bus management unit 113 and a merging unit 114.

In the address lock list 102, an address of the write destination of data of a write control instruction already output to the UPI 61 and a tag that is information for uniquely identifying the write control instruction are written.

The sequence control flag 103 is a flag indicating whether a sequence control instruction has already been output to the FIU 12 or not. In this embodiment, when the sequence control flag 103 has a value set to "1", it indicates that the sequence control instruction has already been output to the FIU 12 and that the sequence control is being executed. When the sequence control flag 103 has a value set to "0", it indicates that the sequence control instruction has not been output to the FIU 12 and that the sequence control is not being executed.

When the address filter 111, the sequence control filter 112, the bus management unit 113 and the merging unit 114 receive input of a packet of a read control instruction from the AFU 11, they output the packet of the obtained read control instruction to the FIU 12 as it is. On the other hand, when receiving input of a packet of a write control instruction, the address filter 111, the sequence control filter 112, the bus management unit 113 and the merging unit 114 perform the following output control processing on the obtained write control instruction. Hereinafter, a packet of a write control instruction will be simply called a "write control instruction".

The address filter 111 receives input of a write control instruction from the AFU 11. The address filter 111 determines whether the received write control instruction is a sequence control instruction or not. If the write control instruction is a sequence control instruction, the address filter 111 outputs the obtained sequence control instruction to the sequence control filter 112 without registering its address with the address lock list 102.

If the write control instruction is a direct write instruction or a via-cache write instruction, the address filter 111 checks the sequence control flag 103 and determines whether the value of the sequence control flag 103 is "1" or the sequence control is being executed or not. Hereinafter, a direct write instruction or a via-cache write instruction may collectively be called a "data write instruction".

If the sequence control is not being executed, the address filter 111 writes the address of the storage destination of the data designated by the data write instruction and its tag to the address lock list 102. The tag is information for uniquely identifying a data write instruction and is generated for and added to the data write instruction by the AFU 11. After that, the address filter 111 outputs the data write instruction to the sequence control filter 112.

When the sequence control is being executed, the address filter 111 outputs the data write instruction to the sequence control filter 112 without registering its address with the address lock list 102.

The sequence control filter 112 receives input of a write control instruction from the address filter 111. At that time, the sequence control filter 112 also obtains from the address filter 111 information indicating whether the write control instruction is a sequence control instruction or not. If the write control instruction is a data write instruction, the sequence control filter 112 outputs the sequence control instruction to the bus management unit 113 by keeping the state of the value of the sequence control flag 103.

On the other hand, if the write control instruction is a sequence control instruction, the sequence control filter 112 determines whether the value of the sequence control flag 103 is "1" or whether the sequence control is being executed or not. If the sequence control is being executed, the sequence control filter 112 outputs the sequence control instruction to the bus management unit 113 by keeping the state of the value of the sequence control flag 103 at "1".

On the other hand, if the sequence control is not being executed, the sequence control filter 112 sets the value of the sequence control flag 103 to "1". After that, the sequence control filter 112 outputs the sequence control instruction to the bus management unit 113.

The bus management unit 113 receives input of the write control instruction from the sequence control filter 112. If the write control instruction is a sequence control instruction, the bus management unit 113 outputs the obtained sequence control instruction to the merging unit 114 without performing processing of selecting a bus to be used.

On the other hand, if the write control instruction is a data write instruction, the bus management unit 113 determines whether it is a data write instruction acquired by newly adding registration information including the address and the tag to the address lock list 102 by the address filter 111. If the data write instruction is the data write instruction acquired by newly adding the registration information to the address lock list 102 by the address filter 111, the bus management unit 113 outputs the obtained data write instruction to the merging unit 114 by keeping the UPI 61 as the bus to output the data.

On the other hand, if the data write instruction is the data write instruction acquired by newly adding the registration information, the bus management unit 113 determines whether the address of the storage destination of the data designated in the data write instruction is registered with the address lock list 102 or not. If the address of the storage destination of the data is registered with the address lock list 102, the address filter 111 outputs the data write instruction to the merging unit 114 by keeping the UPI 61 as the bus to output the data.

On the other hand, if the address of the storage destination of the data is not registered with the address lock list 102, the address filter 111 changes the bus that is the output destination of the data of the data write instruction to the PCI bus 62. After that, the address filter 111 outputs to the merging unit 114 the data write instruction the output destination bus of which has been changed to the PCI bus 62.

The merging unit 114 has a temporary storage unit that stores a write control instruction caused to wait for being output to the FIU 12. The merging unit 114 manages write control instructions caused to wait for being output by arranging the write control instructions in input order in the temporary storage unit.

The merging unit 114 receives input of a write control instruction from the bus management unit 113. If the output destination of the obtained write control instruction is the PCI bus 62, the merging unit 114 outputs the obtained write control instruction to the FIU 12.

If the output destination is not the PCI bus 62, the merging unit 114 performs the following processing. The case where the output destination is not the PCI bus 62 also involves a sequence control instruction whose output destination is not designated.

If the obtained write control instruction is a sequence control instruction, the merging unit 114 determines whether a sequence control instruction waiting for being merged exists in the temporary storage unit in the merging unit 114. If no sequence control instruction waiting for being merged exists, the merging unit 114 merges the sequence control instruction waiting for being merged and the newly obtained sequence control instruction. In this case, for example, the merging unit 114 deletes the previous sequence control instruction waiting for being merged from the temporary storage unit and stores the newly obtained sequence control instruction at the end of the write control instructions arranged in the temporary storage unit.

If the obtained write control instruction is a data write instruction, the merging unit 114 checks the sequence control flag 103. If the value of the sequence control flag 103 is 0 and the sequence control is not being executed, the merging unit 114 outputs the obtained data write instruction to the FIU 12.

On the other hand, if the value of the sequence control flag 103 is 0 and the sequence control is being executed, the merging unit 114 determines whether any via-cache write instruction waiting for being merged exists in the temporary storage unit. If no via-cache write instruction waiting for being merged exists, the merging unit 114 stores the obtained data write instruction at the end of the write control instructions arranged in the temporary storage unit.

On the other hand, if a data write instruction waiting for being merged exists, the merging unit 114 determines whether any data write instruction waiting for being merged exists which has the same address of the storage destination of the data as that of the newly obtained data write instruction. If no data write control instruction waiting for being merged with the same address of the storage destination of data exists, the merging unit 114 stores the newly obtained data write instruction at the end of the write control instructions arranged in the temporary storage unit.

On the other hand, if a data write instruction waiting for being merged with the same address of the storage destination of data exists, the merging unit 114 merges the newly obtained data write instruction and the data write instruction waiting for being merged with the same address of the storage destination of the data. For example, if the data are an index, the merging unit 114 performs the merging by holding the data of the newly obtained data write instruction and deleting the data write instruction waiting for being merged. If each of the bits of the data indicates a flag, the merging unit 114 performs the merging by ORing each of the bits of the data of the newly obtained data write instruction and each of the bits of the data of the data write instruction waiting for being merged and determining the result as values of each of the bits of the merged data write instruction. In this manner, the merging processing is preferably used according to details of the data or an application using the data. The merging unit 114 stores the merged data write instruction at the end of the write control instructions arranged in the temporary storage unit.

If any write control instruction waiting for being merged exists in the temporary storage unit, the merging unit 114 checks the sequence control flag 103. If the sequence control flag 103 has 0, the merging unit 114 outputs the write control instructions stored in the temporary storage unit in order of storage. In other words, for example, if the value of the sequence control flag 103 is 1 and the sequence control is being executed, the merging unit 114 sequentially stores the write control instructions to be output to the UPI 61 in the temporary storage unit. When the sequence control flag 103 has 0 and the sequence control is cancelled, the merging unit 114 starts outputting the write control instructions.

The tag check unit 104 receives from the FIU 12 input of a response to a data write instruction output by the merging unit 114. The response includes information on the tag of the corresponding write control instruction.

The tag check unit 104 determines whether the tag of the data write instruction corresponding to the response is registered with the address lock list 102 or not. If the tag of the data write instruction corresponding to the response is registered with the address lock list 102, the tag check unit 104 deletes the registration information corresponding to the tag from the address lock list 102.

Next, the tag check unit 104 determines whether the address lock list 102 is empty or not. If the address lock list 102 is empty, the tag check unit 104 clears the sequence control flag 103 and sets the value to 0 which indicates the state that the sequence control is not being executed. After that, the tag check unit 104 outputs the response to the AFU 11.

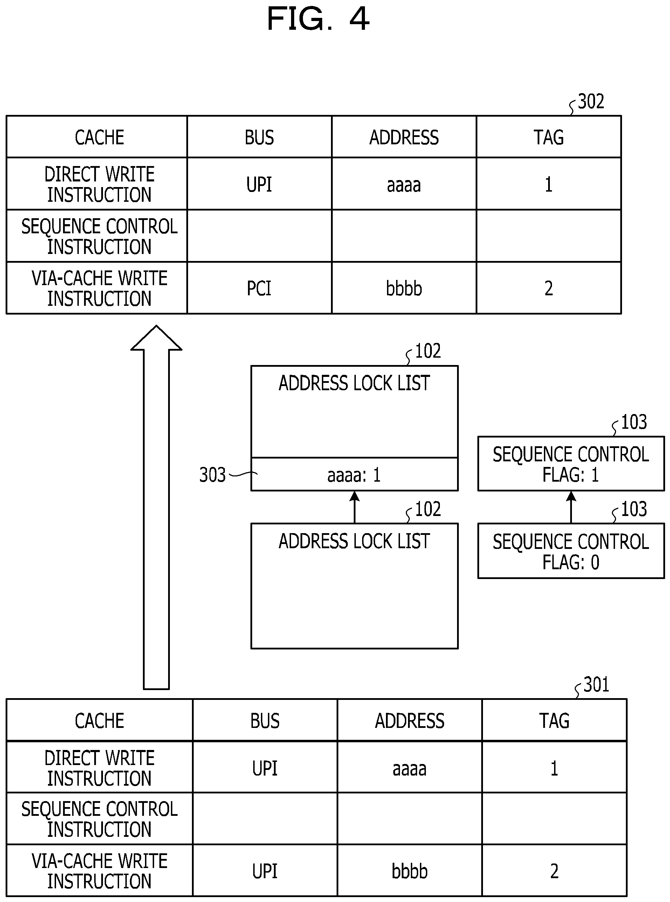

With reference to FIG. 4, a flow of processing to be performed when the bus of the output destination is changed to the PCI bus 62. FIG. 4 is a diagram illustrating transitions of write control instructions when a bus control is executed.

In this case, write control instructions in Table 301 in FIG. 4 are input in the written order from the AFU 11 to the FPGA 1. In other words, for example, the FPGA 1 sequentially receives input of a direct write instruction with "aaaa" as the address of the storage destination of data and "1" as its tag, a sequence control instruction, and a via-cache write instruction with "bbbb" as the address of the storage destination of data and "2" as its tag.

The address filter 111 determines that the value of the sequence control flag 103 is "0" and registers registration information 203 including information of the address "aaaa" and the tag "1" with the address lock list 102. The sequence control filter 112 outputs to the bus management unit 113 the direct write instruction with "aaaa" as the address of the storage destination of data and "1" as its tag. The bus management unit 113 determines that the registration information 203 of the obtained direct write instruction is newly registered with the address lock list 102 and outputs the obtained direct write instruction to the merging unit 114 without changing the bus of the output destination of the obtained direct write instruction. The merging unit 114 obtains the direct write instruction with "aaaa" as the address of the storage destination of data and "1" as its tag. In this case, because no data write instruction waiting for being merged exists in the temporary storage unit, the merging unit 114 outputs the obtained direct write instruction to the UPI 61 without performing merging.

Next, the address filter 111 outputs the obtained sequence control instruction to the sequence control filter 112. The sequence control filter 112 receives the sequence control instruction. The sequence control filter 112 determines whether the value of the sequence control flag 103 is "1" or not. In this case, because the value of the sequence control flag 103 is "0", the sequence control filter 112 changes the value of the sequence control flag 103 to "1". After that, the sequence control filter 112 outputs the obtained sequence control instruction to the bus management unit 113. The bus management unit 113 outputs the obtained sequence control instruction to the merging unit 114. Because no sequence control instruction waiting for being merged exists in the temporary storage unit, the merging unit 114 outputs the obtained sequence control instruction to the UPI 61 without performing merging.

Next, the address filter 111 obtains a via-cache write instruction with "bbbb" as the address of the storage destination of the data and "2" as its tag. In this case, because the value of the sequence control flag 103 is "1", the address filter 111 outputs the obtained sequence control instruction to the sequence control filter 112 without adding the registration information to the address lock list 102. The sequence control filter 112 outputs the via-cache write instruction with "bbbb" as the address of the storage destination of the data and "2" as its tag to the bus management unit 113. The bus management unit 113 determines that the address registered with the registration information 203 in the address lock list 102 is "aaaa" and determines that it is different from "bbbb" that is the address of the obtained via-cache write instruction. Accordingly, the bus management unit 113 changes, to the PCI bus 62, the output destination of the via-cache write instruction with "bbbb" as the address of the storage destination of the data and "2" as its tag. The bus management unit 113 outputs the via-cache write instruction whose output destination has been changed to the PCI bus 62 to the merging unit 114. Because no data write instruction waiting for being merged exists in the temporary storage unit, the merging unit 114 outputs the obtained sequence control instruction to the UPI 61 without performing merging.

After that, when the tag check unit 104 receives a response to the direct write instruction with "1" as its tag, the tag check unit 104 deletes the registration information relating to the direct write instruction with "1" as its tag from the address lock list 102. Thus, after that, the sequence control instruction input immediately after the direct write instruction is cancelled.

Through the operations above, the three write control instructions input from the AFU 11 illustrated in Table 301 are changed to the write control instructions illustrated in Table 302 and are output to the FIU 12. In this manner, the output control unit 101 changes the output destination of a data write instruction with a different address, which is retained even output to the UPI 61, to the PCI bus 62 and outputs it to the FIU 12. In this case, the data write instruction output to the PCI bus 62 is retained until the sequence control is cancelled in the HA 222 in the cache ring 22. Thus, the use of the UPI 61 whose use cost is expensive may be saved.

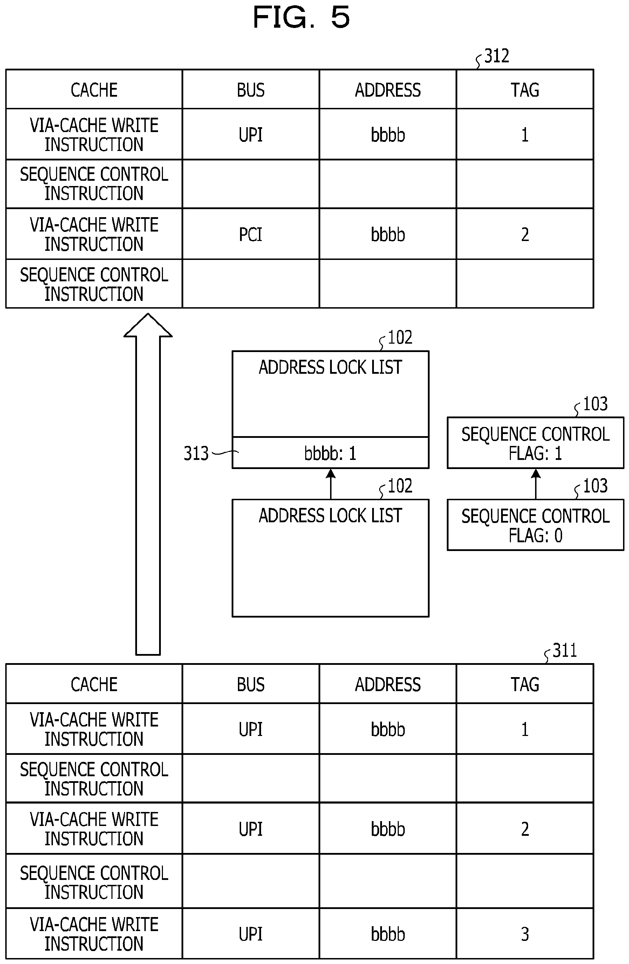

Next, with reference to FIG. 5, a flow of processing to be performed when data write instructions are merged will be described. FIG. 5 is a diagram illustrating transitions of write control instructions when processing for mixing write control instructions is executed.

Write control instructions in Table 311 in FIG. 5 are input in the written order from the AFU 11 in the FPGA 1. In other words, for example, the FPGA 1 sequentially receives input of a via-cache write instruction with "bbbb" as the address of the storage destination of data and "1" as its tag, a sequence control instruction, and a via-cache write instruction with "bbbb" as the address of the storage destination of data and "2" as its tag.

The address filter 111 determines that the value of the sequence control flag 103 is "0" and registers registration information 213 including information of the address "bbbb" and the tag "1" with the address lock list 102. The sequence control filter 112 outputs to the bus management unit 113 the direct write instruction with "bbbb" as the address of the storage destination of the data and "1" as its tag. The bus management unit 113 determines that the registration information 213 of the obtained direct write instruction is newly registered with the address lock list 102 and outputs the obtained direct write instruction to the merging unit 114 without changing the bus being the output destination of the direct write instruction. Because no data write instruction waiting for being merged exists in the temporary storage unit, the merging unit 114 outputs the obtained direct write instruction with "bbbb" as the address of the storage destination of the data and "1" as its tag to the UPI 61 without performing merging.

Next, the address filter 111 obtains the sequence control instruction. The address filter 111 outputs the obtained sequence control instruction to the sequence control filter 112. Because the value of the sequence control flag 103 is "0", the sequence control filter 112 changes the value of the sequence control flag 103 to "1". After that, the sequence control filter 112 outputs the obtained sequence control instruction to the bus management unit 113. The bus management unit 113 outputs the obtained sequence control instruction to the merging unit 114. Because no sequence control instruction waiting for being merged exists in the temporary storage unit, the merging unit 114 outputs the obtained sequence control instruction to the UPI 61 without performing merging.

Next, the address filter 111 obtains the via-cache write instruction with "bbbb" as the address of the storage destination of the data and "2" as its tag. In this case, because the value of the sequence control flag 103 is "1", the address filter 111 outputs the obtained sequence control instruction to the sequence control filter 112 without adding the registration information to the address lock list 102. The sequence control filter 112 outputs the via-cache write instruction with "bbbb" as the address of the storage destination of the data and "2" as its tag to the bus management unit 113. The bus management unit 113 checks that the address registered with the registration information 203 in the address lock list 102 is "bbbb" and determines that it matches "bbbb" that is the address of the obtained via-cache write instruction. Accordingly, the bus management unit 113 keeps the UPI 61 as the output destination of the via-cache write instruction with "bbbb" as the address of the storage destination of the data and "2" as its tag and outputs the via-cache write instruction to the merging unit 114. Because no data write instruction waiting for being merged exists in the temporary storage unit, the merging unit 114 outputs the obtained sequence control instruction to the UPI 61 without performing merging.

Next, the address filter 111 obtains the sequence control instruction. The address filter 111 outputs the obtained sequence control instruction to the sequence control filter 112. Because the value of the sequence control flag 103 is "1", the sequence control filter 112 outputs the obtained sequence control instruction to the bus management unit 113 by keeping the value of the sequence control flag 103. The bus management unit 113 outputs the obtained sequence control instruction to the merging unit 114. Because no sequence control instruction waiting for being merged exists in the temporary storage unit, the merging unit 114 outputs the obtained sequence control instruction to the UPI 61 without performing merging.

Next, the address filter 111 obtains a via-cache write instruction with "bbbb" as the address of the storage destination of the data and "3" as its tag. In this case, because the value of the sequence control flag 103 is "1", the address filter 111 outputs the obtained sequence control instruction to the sequence control filter 112 without adding the registration information to the address lock list 102. The sequence control filter 112 outputs the via-cache write instruction with "bbbb" as the address of the storage destination of the data and "3" as its tag to the bus management unit 113. The bus management unit 113 checks that the address registered with the registration information 203 in the address lock list 102 is "bbbb" and determines that it matches "bbbb" that is the address of the obtained via-cache write instruction. Accordingly, the bus management unit 113 keeps the UPI 61 as the output destination of the via-cache write instruction with "bbbb" as the address of the storage destination of the data and "3" as its tag and outputs the via-cache write instruction to the merging unit 114. Because the via-cache write instruction waiting for being merged exists in the temporary storage unit and the address of the data storage destination is "bbbb", the merging unit 114 merges the via-cache write instruction with "2" as its tag and the via-cache write instruction with "3" as its tag. The merging unit 114 holds the merged via-cache write instruction in the temporary storage unit until the value of the sequence control flag 103 becomes "0".

After that, when the tag check unit 104 receives a response to the direct write instruction with "1" as its tag, the tag check unit 104 deletes the registration information relating to the direct write instruction with "1" as its tag from the address lock list 102. Thus, after that, the sequence control instruction input immediately after the direct write instruction is cancelled. After that, the merging unit 114 outputs the via-cache write instruction acquired by merging the via-cache write instruction with "2" as its tag and the via-cache write instruction with "3" as its tag.

Through the operations above, the five write control instructions input from the AFU 11 illustrated in Table 311 are changed to the four write control instructions illustrated in Table 312 and are output to the FIU 12. In this manner, the output control unit 101 merges data write instructions having the same address, which are retained even output to the UPI 61. Thus, the use of the UPI 61 whose use cost is expensive may be saved.

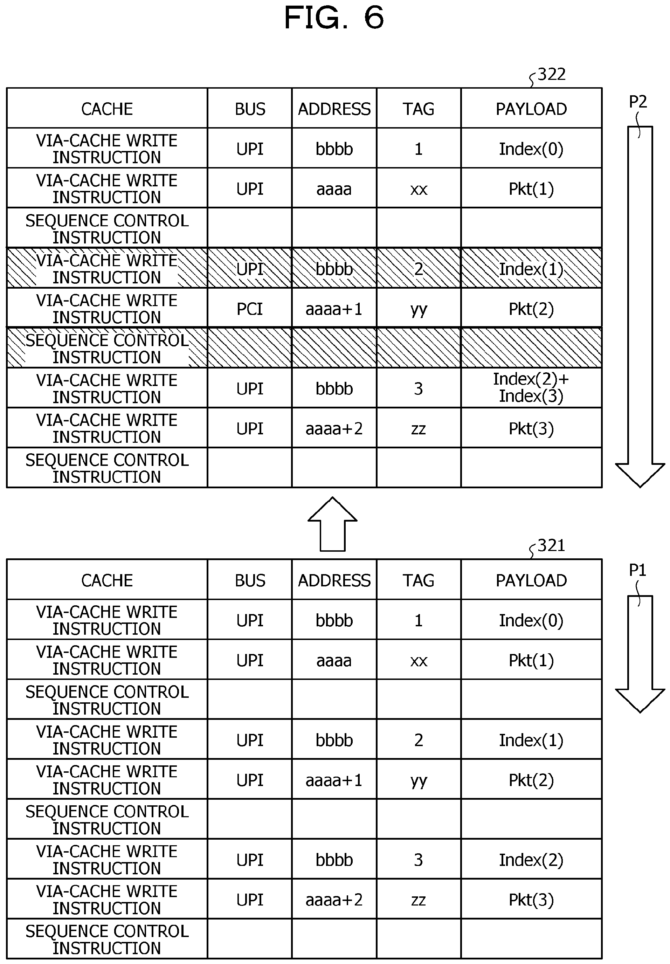

Next, with reference to FIG. 6, a flow of processing when both of the bus changing and the merging processing are executed will be described.

FIG. 6 is a diagram illustrating transitions of write control instructions when both of the bus control and the processing for mixing write control instructions are executed. The following description simply focuses on transitions of each of write control instructions.

Table 321 illustrates write control instructions input to the FPGA 1 through the AFU 11. Table 322 illustrates write control instructions to be output from the FPGA 1 to the FIU 12.

A via-cache write instruction with "bbbb" as the address and "1" as its tag is directly output to the FIU 12 because it is the first write control instruction. In this case, the registration information including "bbbb" as the address and "1" as its tag is registered with the address lock list 102.

Because the next via-cache write instruction with "aaaa" as the address and "xx" as its tag has "0" as the value of the sequence control flag 103, the via-cache write instruction is directly output to the FIU 12 without changing the output destination bus. At that time, registration information including "aaaa" as the address and "xx" as the tag is registered with the address lock list 102.

Due to the next sequence control instruction, the value of the sequence control flag 103 is set to "1". Because no sequence control instruction waiting for being merged exists, the sequence control instruction is output to the FIU 12.

The next via-cache write instruction with "bbbb" as the address and "2" as its tag has the address of the storage destination of the data matching the address registered with the address lock list 102. Accordingly, the via-cache write instruction with "bbbb" as the address and "2" as its tag is stored in the temporary storage unit in the merging unit 114. In this case, because no via-cache write instruction waiting for being merged exists, merging is not performed.

The next via-cache write instruction with "aaaa+1" as the address and "yy" as its tag has "1" as the value of the sequence control flag 103, and the address registered with the address lock list 102 and the address of the data storage destination are different. Accordingly, the output destination of the via-cache write instruction with "aaaa+1" as the address and "yy" as its tag is changed to the PCI bus 62, and the via-cache write instruction is output to the FIU 12. In this case, the addition of the registration information to the address lock list 102 is not performed.

Because no sequence control instruction waiting for being merged with "1" as the value of the sequence control flag 103 exists, the next sequence control instruction is not merged and is stored in the temporary storage unit in the merging unit 114.

The next via-cache write instruction with "bbbb" as the address and "3" as its tag has the address of the storage destination of the data matching the address registered with the address lock list 102. There is a cache write instruction with "bbbb" as the address and "2" as its tag, which is a via-cache write instruction waiting for being merged having the same address of the data storage destination. Accordingly, the via-cache write instruction with "bbbb" as the address and "3" as its tag is merged with the via-cache write instruction with "bbbb" as the address and "2" as its tag. After that, the merged via-cache write instruction is stored in the temporary storage unit in the merging unit 114.

The next via-cache write instruction with "aaaa+2" as the address and "zz" as its tag has "1" as the value of the sequence control flag 103, and the address registered with the address lock list 102 and the address of the data storage destination are different. Accordingly, the output destination of the via-cache write instruction with "aaaa+1" as the address and "yy" as its tag is changed to the PCI bus 62, and the via-cache write instruction is output to the FIU 12. In this case, the addition of the registration information to the address lock list 102 is not performed.

Because a sequence control instruction waiting for being merged with "1" as the value of the sequence control flag 103 exists, the next sequence control instruction is merged therewith and is stored in the temporary storage unit in the merging unit 114.

Through the processing as described above, the write control instructions are shifted to the states illustrated in Table 322. The write control instructions shaded in Table 322 are deleted by the merging and do not exist in reality. When the merging according to this embodiment is not executed, the write control instructions are processed in the order illustrated in Table 321. Thus, the output of the write control instructions stops at the point in time indicated by an arrow P1. On the other hand, because the information processing apparatus 100 according to this embodiment executes the write control instructions in the order illustrated in Table 322 after the merging, the processing of the write control instructions is executed up to the point in time indicated by an arrow P2. Therefore, the stagnation of the processing due to the retention of write control instructions to be output to the UPI 61 may be solved.

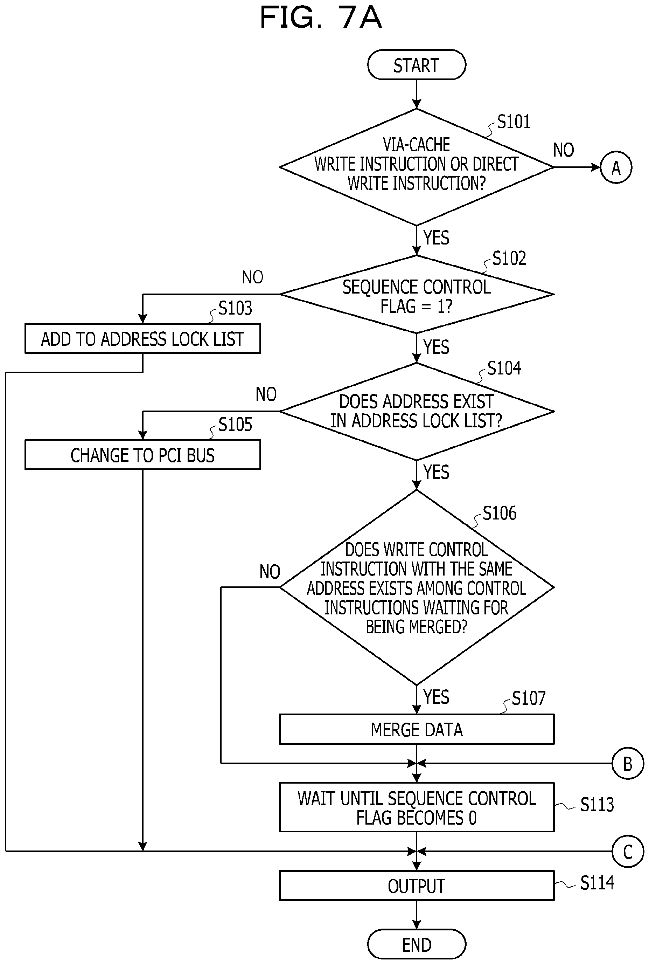

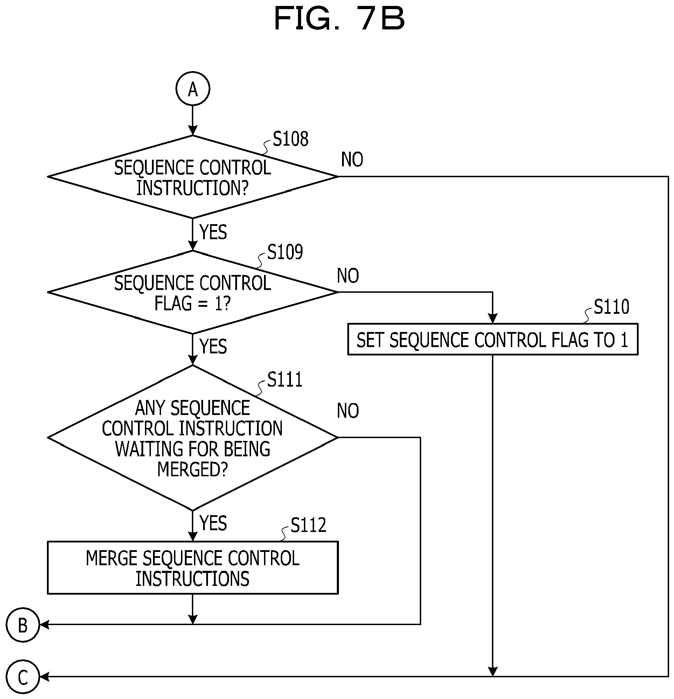

Next, with reference to FIG. 7A AND 7B, a flow of output control processing for a write control instruction by the FPGA 1 according to this embodiment will be described. FIG. 7A AND 7B is a flowchart of output control processing for a write control instruction.

The address filter 111 determines whether an obtained control instruction is a via-cache write instruction or a direct write instruction (step S101).

If the control instruction is either via-cache write instruction or direct write instruction (Yes in step S101), the address filter 111 determines whether the value of the sequence control flag 103 is "1" or not or whether the sequence control is being executed or not (step S102). If the value of the sequence control flag 103 is not "1" (No in step S102), the address filter 111 adds registration information including information on the address and the tag to the address lock list 102 (step S103). After that, the output control processing moves to step S114.

On the other hand, if the value of the sequence control flag 103 is "1" (Yes in step S102), the bus management unit 113 determines whether the address of the storage destination of the data of the obtained write control instruction exists in the address lock list 102 or not (step S104).

If the address does not exist in the address lock list 102 (No in step S104), the bus management unit 113 changes the bus being the output destination to the PCI bus 62 (step S105). After that, the output control processing moves to step S113.

On the other hand, if the address exists in the address lock list 102 (Yes in step S104), the merging unit 114 determines whether any write control instruction has the same address of the storage destination of data among the write control instructions waiting for being merged or not (step S106). If no write control instruction waiting for being merged has the same address of the storage destination of data (No in step S106), the output control processing moves to step S113.

On the other hand, if any write control instruction waiting for being merged has the same address of the storage destination of data (Yes in step S106), the merging unit 114 merges the data (step S107). More particularly, for example, the merging unit 114 merges the data of the write control instruction waiting for being merged and having the same address of the data storage destination and the data of the newly obtained write control instruction (step S107). After that, the output control processing moves to step S113.

On the other hand, if the control instruction is not a via-cache write instruction or a direct write instruction (No in step S101), the sequence control filter 112 determines whether the control instruction is a sequence control instruction or not (step S108). If the control instruction is not a sequence control instruction but is a read control instruction (No in step S108), the output control processing moves to step S114.

On the other hand, if the control instruction is a sequence control instruction (Yes in step S108), the sequence control filter 112 determines whether the value of the sequence control flag 103 is "1" or not or whether the sequence control is being executed or not (step S109).

If the value of the sequence control flag 103 is "0" (No in step S109), the sequence control filter 112 sets the value of the sequence control flag 103 to "1" (step S110). After that, the output control processing moves to step S114.

On the other hand, if the value of the sequence control flag 103 is "1" (Yes in step S109), the merging unit 114 determines whether any sequence control instruction waiting for being merged exists or not (step S111). If no sequence control instruction waiting for being merged exists (No in step S111), the output control processing moves to step S113.

On the other hand, if a sequence control instruction waiting for being merged exists (Yes in step S111), the merging unit 114 merges the sequence control instruction waiting for being merged and the newly obtained sequence control instruction (step S112). After that, the output control processing moves to step S113.

In the output control processing in step S113, the merging unit 114 waits until the value of the sequence control flag 103 becomes "0" (step S113).

In the output control processing in step S114, the merging unit 114 outputs the control instruction to the FIU 12 (step S114).

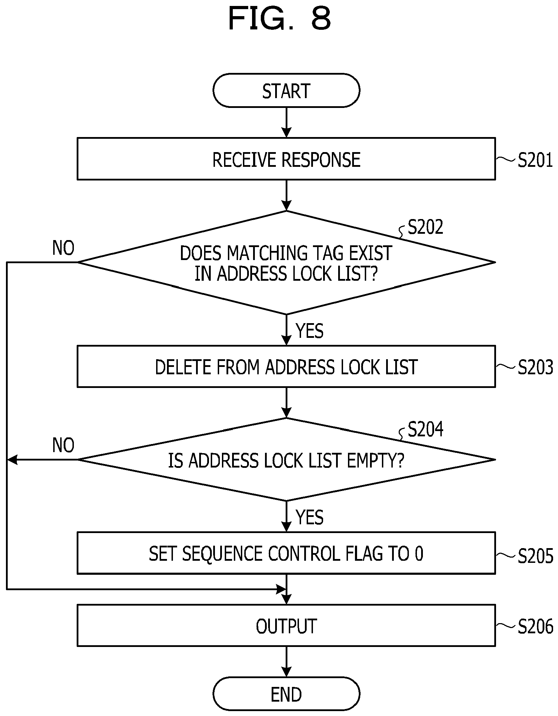

Next, with reference to FIG. 8, a flow of control processing upon reception of a response to a write control instruction by the FPGA 1 according to this embodiment will be described. FIG. 8 is a flowchart of processing to be performed when a response to a write control instruction is received.

The tag check unit 104 receives a response from the FIU 12 (step S201).

Next, the tag check unit 104 obtains a tag included in the received response and determines whether any tag exists that matches the tag included in registration information registered with the address lock list 102 (step S202). If no matching tag exists in the address lock list 102 (No in step S202), the tag check unit 104 advances to step S206.

On the other hand, if a matching tag exists in the address lock list 102 (Yes in step S202), the tag check unit 104 deletes the registration information with the matching tag from the address lock list 102 (step S203).

Next, the tag check unit 104 determines whether the address lock list 102 is empty or not (step S204). If registration information remains in the address lock list 102 (No in step S204), the tag check unit 104 advances to step S206.

On the other hand, if the address lock list 102 is empty (Yes in step S204), the tag check unit 104 sets the value of the sequence control flag 103 to "0" (step S205).

After that, the address lock list 102 outputs the received response to the AFU 11 (step S206).

Having described the DRAM 3 including the ring buffer 31, other methods may be used as a storage method. More specifically, for example, a storage method may be used that has characteristics that data integrity may be maintained even by merging a plurality of index updates and that the order of writing of data of packets before the index updates may be changed. According to this embodiment, an instruction control circuit that executes output control processing in the FPGA 1 is implemented because the merging method is preferably changed in accordance with the application. However, the implementation method is not limited thereto. For example, the instruction control circuit may be constructed by using an application-specific integrated circuit (ASIC). The architecture applying the configuration as described above is assumed to be an architecture that does not guarantee the order of memory requests, and, for example, an x86CPU is a representative architecture.

As described above, the information processing apparatus according to this embodiment changes the output destination of a write control instruction to the PCI bus if the address of the storage destination of the data of the subsequent write control instruction does not match in a state that the sequence control is being executed. If the address of the storage destination of the data of the subsequent write control instruction matches in a state that the sequence control is being executed, the write control instruction is merged. Thus, the bus assignment of the PCI bus and the UPI may be controlled independently from the application. The sequence control instructions that limits the system performance may be reduced, and the processing performance may be improved.

## Claims

1. An information processing circuit comprising:
a first path being an output path for an instruction and a second path having a lower transfer rate than that of the first path;
an instruction obtaining unit that sequentially obtains write control instructions including an output waiting instruction that stops output of a subsequent instruction;
an output unit that sequentially outputs the write control instructions via the first path or the second path;
a response receiving unit that receives responses to the write control instructions output from the output unit; and
an output control unit that selects one of the first path and the second path based on a storage addresses of the write control instructions, determines whether to merge the write control instructions, merges the write control instructions based on the determination and causes the output unit to output the result.

2. The information processing circuit according to claim 1,
wherein the output control unit selects the first path when there is no write control instruction that is output from the output unit and when a response thereto is not received by the response receiving unit.

3. The information processing circuit according to claim 1,
wherein the output control unit has a bus management unit that, when a preceding write control instruction and the output waiting instruction are output from the output unit and a response to the preceding write control instruction is not received by the response receiving unit and when a storage address of a subsequent write control instruction received by the instruction obtaining unit is different from a storage address of the preceding write control instruction, selects the first path and causes the output unit to output the subsequent write control instruction.

4. The information processing circuit according to claim 1,
wherein the output control unit has a merging unit that, when a first write control instruction and the output waiting instruction are output from the output unit and a response to the first write control instruction is not received by the response receiving unit and when storage addresses of a second write control instruction and a third write control instruction received by the instruction obtaining unit match a storage address of the first write control instruction, merges the second write control instruction and the third write control instruction.

5. The information processing circuit according to claim 4,
wherein, when the output waiting instruction exists between the second write control instruction and the third write control instruction, the merging unit deletes the output waiting instruction between the second write control instruction and the third write control instruction and merges the second write control instruction and the third write control instruction.

6. The information processing circuit according to claim 1, wherein the output waiting instruction causes a flag to be set that triggers the stop of the second instruction.

7. The information processing circuit according to claim 6, wherein the flag is changed after the output of the result.

8. The information processing apparatus according to claim 1, when the output waiting instruction immediately precedes a first write control instruction, a destination address of the write control instruction is registered in a memory.

9. An information processing method performed by a circuit, the method comprising:
sequentially obtaining write control instructions for a plurality of kinds of data including an output waiting instruction that stops output of a subsequent instruction;
sequentially outputting the write control instructions via the first path or the second path;
receiving responses to the write control instructions output from the output unit circuit; and
selecting one of the first path and the second path based on a storage addresses of the write control instructions, determining the necessity for mixing the write control instructions, mixing the write control instructions and causing the output unit circuit to output the result.

10. A non-transitory computer-readable recording medium having stored a program for causing a computer to execute a process, the process comprising:
sequentially obtaining write control instructions for a plurality of kinds of data including an output waiting instruction that stops output of a subsequent instruction;
sequentially outputting the write control instructions via the first path or the second path;
receiving responses to the write control instructions output from the output unit circuit; and
selecting one of the first path and the second path based on a storage addresses of the write control instructions, determining the necessity for mixing the write control instructions, mixing the write control instructions and causing the output unit circuit to output the result.

11. A program for causing a computer to execute a process, the process comprising:
sequentially obtaining write control instructions for a plurality of kinds of data including an output waiting instruction that stops output of a subsequent instruction;
sequentially outputting the write control instructions via the first path or the second path;
receiving responses to the write control instructions output from the output unit circuit; and
selecting one of the first path and the second path based on a storage addresses of the write control instructions, determining the necessity for mixing the write control instructions, mixing the write control instructions and causing the output unit circuit to output the result.
